# EUROPEAN PATENT APPLICATION

(11) **EP 4 811 777 A1**
(43) Date of publication of application: **23.09.2026**
(21) Application number: 25305355.7
(22) Date of filing: 17.03.2025
(51) Int. Cl.: H04N 19/117, H04N 19/156, H04N 19/70, H04N 19/80

(54) **ADDING ARCHITECTURE-RELATED INFORMATION TO NEURAL NETWORK POST FILTERS**

(71) Applicant: InterDigital CE Patent Holdings, SAS, 75017 Paris (FR)
(72) Inventor: DEMARTY, Claire-Helene, 35520 MONTREUIL LE GAST (FR); FRANCOIS, Edouard, 35890 BOURG DES COMPTES (FR); GALPIN, Franck, 35235 THORIGNE-FOUILLARD (FR); AUMONT, Franck, 35770 VERN SUR SEICHE (FR)
(74) Representative: Vossius & Partner Patentanwälte Rechtsanwälte mbB

(57) **Abstract**

Systems, methods, and instrumentalities are disclosed for adding network architecture-related information to metadata messages associated with neural network post filters. For example, a device (e.g., video decoding device), may obtain metadata information associated with a network architecture of a neural network. The device may obtain the metadata information within a message (e.g., supplemental enhancement information (SEI) message). The metadata information may include additional information that may enable an estimation of energy needed to run a neural-network post filter (NNPF). The device may estimate an amount of energy associated with running the NNPF from the additional information. The device may apply the NNPF based on the estimated amount of energy associated with running the NNPF.

## Description

### BACKGROUND

The present application is related to video coding systems that may be used to compress digital video signals, e.g., to reduce the storage and/or transmission bandwidth needed for such signals. Video coding systems may include, for example, block-based, wavelet-based, and/or object-based systems.

### BRIEF SUMMARY

Systems, methods, and instrumentalities are disclosed for adding network architecture-related information to metadata messages associated with neural network post filters. For example, a device (e.g., video decoding device), may obtain metadata information associated with a network architecture of a neural network. The device may obtain the metadata information within a message (e.g., supplemental enhancement information (SEI) message). The metadata information may include additional information that may enable an estimation of energy needed to run a neural-network post filter (NNPF). The device may estimate an amount of energy associated with running a NNPF from the additional information. The device may apply the NNPF based on the estimated amount of energy associated with running the NNPF.

For example, a device (e.g., video encoding device) may obtain information associated with a network architecture of a neural network. The device may determine to add additional information to the metadata information. The additional information may enable an estimation of energy needed to run an NNPF. The device may include, in video data, the additional information, for example, within a message (e.g., SEI message).

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 illustrates an example receptive field in a 3 layer CNN.
FIG. 5 illustrates an example flow of determining whether to apply an NNPF based on an obtained NNPFC SEI message.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

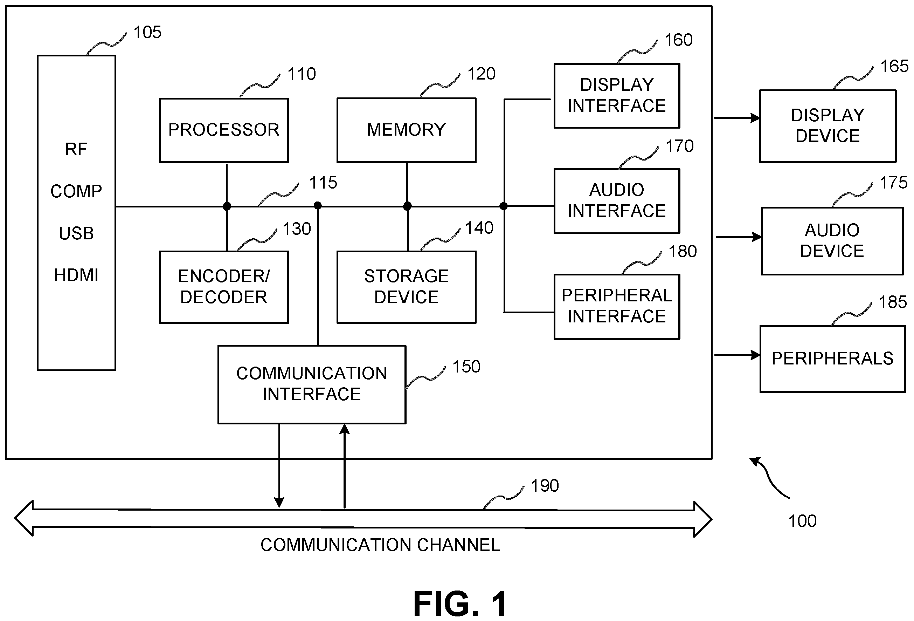

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

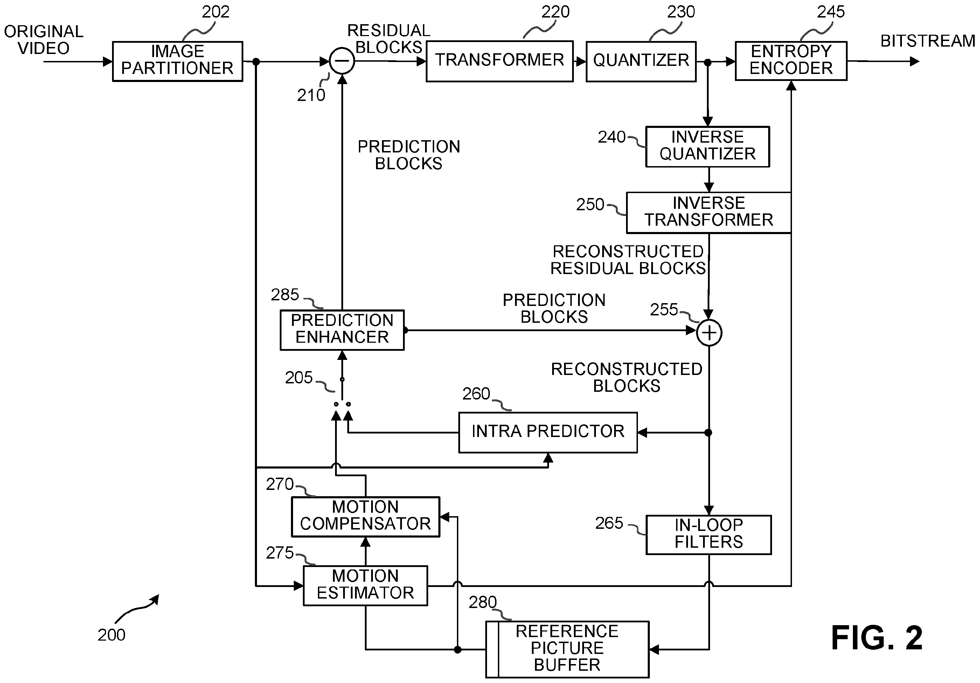

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

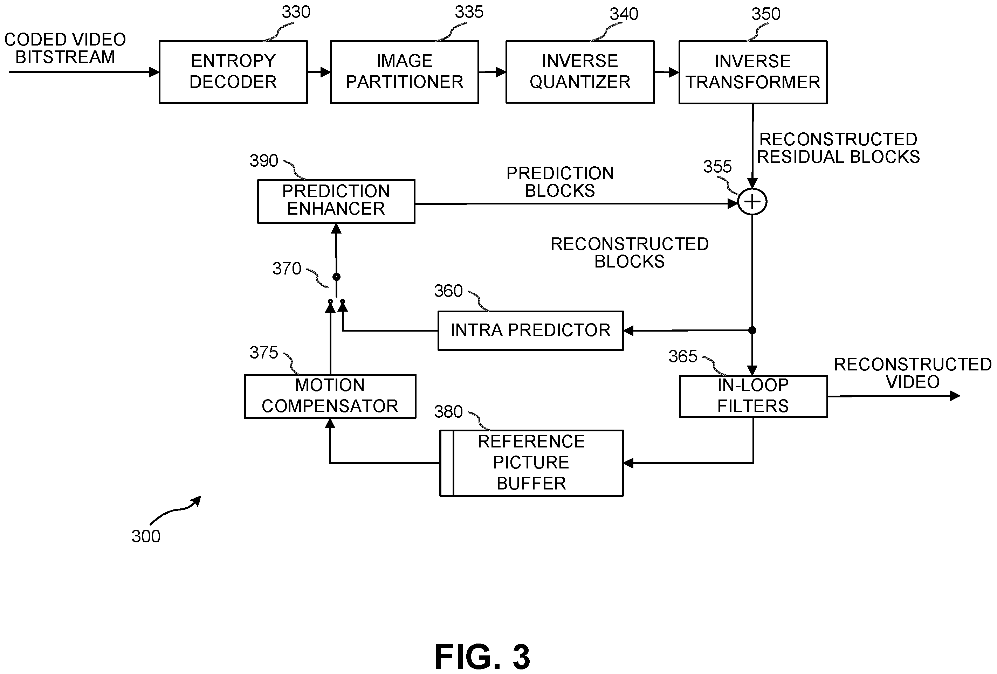

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, *Y,* and chroma components, *U* and *V* (also denoted herein by *C*, *Cb, Cr*)*.*

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Systems, methods, and instrumentalities are disclosed for adding network architecture-related information to metadata messages associated with neural network post filters. For example, a device (e.g., video decoding device), may obtain metadata information associated with a network architecture of a neural network. The device may obtain the metadata information within a message (e.g., supplemental enhancement information (SEI) message). The metadata information may include additional information that may enable an estimation of energy needed to run a neural-network post filter (NNPF). The device may estimate an amount of energy associated with running a NNPF from the additional information. The device may apply the NNPF based on the estimated amount of energy associated with running the NNPF.

For example, a device (e.g., video encoding device) may obtain information associated with a network architecture of a neural network. The device may determine to add additional information to the metadata information. The additional information may enable an estimation of energy needed to run an NNPF. The device may include, in video data, the additional information, for example, within a message (e.g., SEI message).

A neural network post filter may be used (e.g., at the decoder side), for example, in the context of video compression. Details associated with consumption in terms of energy and the link between this consumption and video compression architecture may be described herein.

Neural-network post-filter SEI messages may be provided, used, and/or described, for example, with respect to video compression.

A message (e.g., neural-network post-filter characteristics (NNPFC) SEI message) may specify a neural network that may be used as a post-processing filter.

The NNPFC SEI message may enable (e.g., allow) an encoder to define a neural network to be used in an operation (e.g., decoding operation), for example, such as a post-processing operation (e.g., after the decoding operation). This message may specify the input and output of the neural network and may describe its complexity. For example, an encoder may include (e.g., in video data) metadata information within an SEI message. The metadata information may be determined based on obtained information associated with a neural network.

The NNPFC SEI message may indicate a purpose (e.g., the intended purpose) (e.g., denoted nnpfc_purpose) of the neural network. For example, one or more modes may be defined (e.g., for a purpose of the neural network), for example, such as one or more of the following: enhancing visual quality; chroma upsampling; changing spatial resolution, e.g., from high-definition decoded video to ultra-high definition; upsampling picture rate, e.g., from 30 Hz to 60 Hz; upsampling bit depth to increase the dynamic range of pixel values; colorization to convert monochrome video to full colors; temporal extrapolation; spatial extrapolation; tone mapping; etc. Table 1 illustrates example modes.

**Table 1: Example definition of a nnpfc_purpose**

| bitMask | Interpretation |
|---|---|
| 0x01 | General visual quality improvement |
| 0x02 | Chroma upsampling (from the 4:2:0 chroma format to the 4:2:2 or 4:4:4 chroma format, or from the 4:2:2 chroma format to the 4:4:4 chroma format) |
| 0x04 | Resolution resampling (increasing or decreasing the width or height) |
| 0x08 | Picture rate upsampling |
| 0x10 | Bit depth upsampling (increasing the luma bit depth or the chroma bit depth) |
| 0x20 | Colourization |
| 0x40 | Temporal extrapolation (i.e., generating one or more future pictures) |
| 0x80 | Spatial extrapolation (i.e., generating content outside of the spatial area of the input pictures) |
| 0x100 | Tone mapping (i.e., modification of the colour samples values, in terms of contrast, colour, saturation, luminance) |

By implementing neural-network filters as a post-processing step, their utilization can be introduced to some services, for example, without negatively impacting systems, for example, older systems that may lack the ability to execute neural networks. Applying such post filters may involve (e.g., necessitate) some extra energy consumption (e.g., as compared with refraining from applying post filters).

Additional information may be included in a message (e.g., in the NNPFC SEI message), for example, to give information on the architecture of the NNPF. Such information may be used to estimate (e.g., more precisely estimate) the energy needed to apply a given neural network post filtering.

As such, details herein are provided for supplemental enhancement information (SEI) signaling, neural network post filter characteristics, network architectures, energy consumptions, etc.

Applying a neural network may use energy (e.g., need a certain non-negligible amount of energy). The energy that used (e.g., required) to be run may be estimated (e.g., precisely estimated). In examples, benefits may include one or more of the following: if at the decoder, it is considered that not enough energy is available, the application of the neural network may be refrained from taking place (e.g., may not take place); it may also help take decisions between one post filter or another, or one post filter and another processing based on the energy needed; when returned to the user, it may also make the user aware of the energy needed by applying some post filtering, making the user decide to refrain from applying (e.g., not apply) the post filter in the end.

The estimation of the energy information may be performed at the device side, e.g., where the NNPF may be run (e.g., because it may use known information related to the hardware or software implementation on the device for example which may not be known at the encoder side). The device may use information (e.g., need to have some precise information) about the NNPF itself.

Information (e.g., some information) may be available in the NNPFC SEI message that relates to the amount of needed energy, for example, one or more of the following: the number of macs, the memory needed size, etc. However, this information may not be sufficient to estimate (e.g., precisely estimate) the needed energy, for example, as it may depend on other factors (e.g., the architecture of the network itself).

Information related to the network's architecture may be sent to enable a more precise estimation of the needed energy for running the NNPF.

The NNPFC SEI message may include information (e.g., some information) about the complexity of applying a given NNPFC, for example, in terms of number of parameters, size of needed memory and number of MAC (e.g., multiplication - accumulation operations).

In examples, the numbers (e.g., related to the energy) may not be sufficient to give a clear view of the final consumption of running one neural network or another.

As per the network architecture, information (e.g., some information) may be carried in the NNPFC message related to the size of its input and output layers. The full architecture may not be available (e.g., always be directly available). Depending on the value of metadata nnpfc_mode, the architecture may be included in the SEI message itself as an encoded bitstream or provided through access to an URL. When included in the SEI message, the metadata (e.g., including at least the architecture) may be decoded (e.g., may be decoded first) before being used.

An estimation of the energy used (e.g., needed) to run the NNPF may be sent (e.g., by an encoder). However, information may use (e.g., require) to know (e.g., exactly) on which hardware/software the NNPF will be run. Such information may not be available (e.g., at the encoder side).

Additional information indicative of the network architecture may be included, for example, in a message. Such additional information (e.g., the sparsity of the network, the number of weights equal to one, information related to the receptive fields (e.g., the maximum, minimum size of the receptive fields, the minimum receptive field, the receptive field resulting from the composition of all the receptive fields for each layer), the compatibility with a list of data types, the maximal layer size, a simplified network architecture, etc.) may enable an estimation (e.g., more precise estimation) of the energy amount used (e.g., needed) to run a neural network post filter (e.g., as described in the NNPFC SEI message).

Additional information indicative of the network architecture (e.g., such as, the sparsity of the network, the number of weights equal to 1 in the network, the maximal layer size, information related to the receptive fields of the network (e.g., the maximum, minimum size of the receptive fields, the minimum receptive field, the receptive field resulting from the composition of all the receptive fields for each layer), the compatibility of the network with certain data types, a simplified network architecture, etc.) may be included in the NNPFC SEI message.

Such metadata can be added at different locations in the syntax (e.g., existing syntax), for example, such as one or more of the following: metadata may be added within nnpfc_mode equal to 1; metadata may be added within nnpfc_mode equal to 0; metadata may be added via multiple (e.g., two) values (e.g., new values) for nnfc_mode; metadata may be added within the extension metadata (e.g., nnpfc_num_metadata_extension_bits > 0); metadata may be added within the complexity metadata (e.g., nnpfc_complexity_info_present_flag == 1); metadata may be added in the NNPFGC SEI message for a group of NNPFs; etc.

Semantics associated with the added information may be described herein.

The additional information may describe one or more of the following: the sparsity of the neural network (e.g., which may correspond to the number of weights equal to 0 in the network), the number of weights equal to 1 in the network, the maximal layer size, information (e.g., the size of) about the receptive fields of the network, the compatibility of the network with certain data types, or a simplified network architecture. The metadata (e.g., any of these metadata and any combination of these metadata) may be envisioned in alternative examples. For metadata (e.g., each of the respective metadata), the link with the estimation of the energy used (e.g., needed) to run an NNPF may be described.

Additional information associated with sparsity or number of weights equal to zero may be included and/or described herein. For example, the additional information associated with sparsity may include one or more of nnpfc_non_null_weights or nnpfc_sparsity_idc.

For example, nnpfc_non_null_weights may indicate the number (e.g., for example a maximum number) of non-null weights of the neural network. This number may be indicated in units of a power of 2048. nnpfc_non_null_weights equal to 0 may indicate that the number (e.g., maximum number) number of non-null weights of the neural network is unknown. The value nnpfc_non_null_weights may be in the range of 0 to 52, inclusive.

In examples, if the value of nnpfc_non_null_weights is greater than zero, the variable numNonNullWeights may be derived as follows: $numNonNullWeights = \left(2 048≪nnpfc_non_null_weights\right) - 1$

In examples (e.g., as an alternative or together with the above metadata), the sparsity of the neural network may be indicated by the following metadata (e.g., nnpfc_sparsity_idc).

For example, nnpfc_sparsity_idc may indicate the sparsity of the neural network as a percentage of its parameters. nnpfc_sparsity_idc equal to 0 may indicate that the sparsity of the neural network is unknown. This value may be in the range 0 and 100 and coded over 7 bits. As an alternative, it may be coded according to Table 2 (e.g., in a case where the nnpfc_sparsity _idc is coded over 2 bits).

**Table 2. Example of nnpfc_sparsity_idc metadata**

| **nnpfc_sparsity_ide** | **Interpretation** |
|---|---|
| 0 | The sparsity is 5% |
| 1 | The sparsity is 10% |
| 2 | The sparsity is 20% |
| 3 | The sparsity is 30% |

If (e.g., when) a neural network's weight is equal to 0, a (e.g., any) multiplication where this weight is involved may result in 0. Such operations may be saved by testing whether (e.g., if) the weight is null, and replacing directly the result with zero, for example, which may save performing operations, and consequently energy.

Additional information associated with a number of weights equal to 1 may be included and/or described herein. A number indicative of the number of weights that are equal to 1 in the neural network may be given through one or more of the following metadata: nnpfc_weights_equal_one, nnpfc_proportion_of_ones _idc; etc.

For example, nnpfc_weights_equal_one may indicate the number (e.g., maximum number) of weights equal to 1 of the neural network. This number may be indicated in units of a power of 2048. nnpfc_weights_equal_one equal to 0 may indicate that the number (e.g., maximum number) of weights equal to 1 of the neural network is unknown. The value nnpfc_weights_equal_one may be in the range of 0 to 52, inclusive.

If the value of nnpfc_weights_equal_one is greater than zero, the variable numWeightsEqualOne may be derived as follows: $numWeightsEqualOne = \left(2 048≪nnpfc_weights_equal_one\right) - 1$

Similarly to nnpfc_sparsity_idc, and as an alternative, or together with the above metadata, the proportion in the neural network of weights equal to 1 may be indicated by the following metadata.

For example, nnpfc_proportion_of_ones_idc may indicate the number of weights equal to 1 in the neural network as a percentage of its parameters. nnpfc_proportion_of_ones_idc equal to 0 may indicate that the number of weights equal to 1 in the neural network is unknown. This value may be in the range 0 and 100 and coded over 7 bits. As an alternative, it may be coded according to the Table 3 (e.g., in a case that the nnpfc_proportion_of_ones_idc is coded over 2 bits).

**Table 3. Example of nnpfc_proportion_of_ones_idc metadata**

| **nnpfc_proportion_of_ones_idc** | **Interpretation** |
|---|---|
| 0 | The proportion of weights equal to 1 is 5% |
| 1 | The proportion of weights equal to 1 is 10% |
| 2 | The proportion of weights equal to 1 is 20% |
| 3 | The proportion of weights equal to 1 is 30% |

If (e.g., when) a neural network's weight is equal to 1, a (e.g., any) multiplication where this weight is involved may correspond to the identity. Such operations can therefore be saved (e.g., refrained from being performed) by testing if the weight is equal to 1, thus saving operations, and consequently energy.

Additional information associated with maximal size of layers may be included and/or described herein. For example, the additional information may include one or more of the following: nnpfc_max_layer_size, which may indicate the maximum layer size of the layers in the neural network, or nnpfc_max_layer_size_idc which may indicate the maximum layer size of the layers in the neural network and it may be coded according to Table 4 (the values serve as examples and may be changed by other layer sizes).

**Table 4. Example of nnpfc_max_layer_size_idc metadata**

| **nnpfc_max_layer_size_idc** | **Interpretation** |
|---|---|
| 0 | The maximum layer size is equal 32 |
| 1 | The maximum layer size is equal 64 |
| 2 | The maximum layer size is equal 128 |
| 3 | The maximum layer size is equal 256 |
| 4 | The maximum layer size is equal 512 |
| 5 | The maximum layer size is equal 1024 |
| 6-7 | Reserved for future use |

Memory transfer of data (e.g., into memory, from memory, and from memory location to another memory location) highly contributes to the energy consumption. Data and/or metadata indicating weights of the network's layers may be transferred. Depending on the size of the available memory, a part of a given layer may be transferred (e.g., only a part of the given layer may be transferred), for example, if its size is bigger than the available memory (e.g., which may result in a higher energy consumption due to these memory transfers).

Knowing whether the maximum layer size can be stored in the memory may be an indication of the final network's energy consumption.

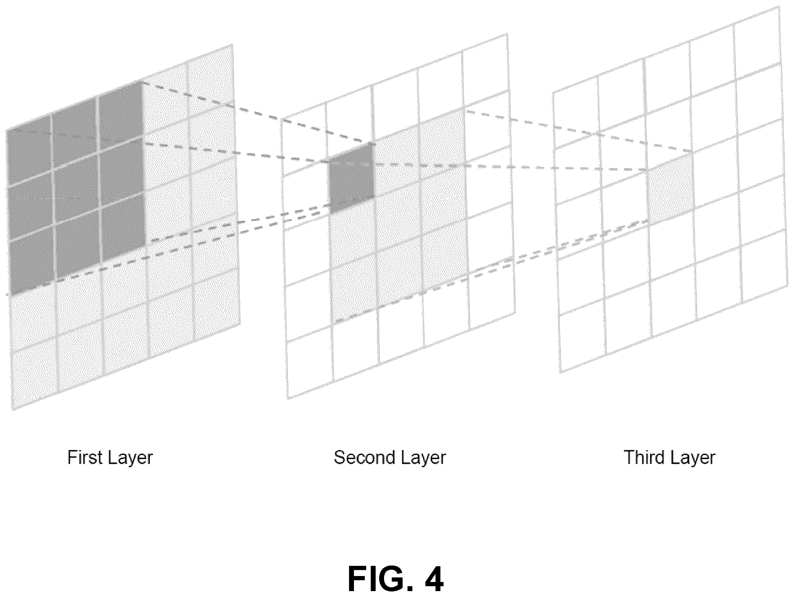

Additional information associated with a receptive field may be included and/or described herein. The receptive field or field of vision of a unit in a certain layer of a neural network may be used in deep CNNs and some other architecture types. In contrast to fully connected networks, where the value of each unit may be determined by the complete input to the network, a unit in convolutional networks may be determined by a subset of the input. This region in the input may be the unit's receptive field. It may correspond to the region in the input space that a feature (e.g., particular CNN's feature) is affected by (e.g., as shown in FIG. 4). FIG. 4 illustrates an example of a receptive field in a 3-layer CNN.

In examples, the fully-convolutional neural network may include three layers, for example, an input layer corresponding to the input content and two additional network layers, where a (e.g., each) network layer has a 3×3 kernel. A first area (e.g., darker highlighted squares in the top left portion of the first layer and the top left portion of the second layer of FIG. 4) may correspond to the receptive field of a (e.g., one) pixel in the second layer. A second area (e.g., lighter highlighted squares in the middle portion the first layer, second layer, and third layer of FIG. 4) may correspond to the receptive field of one pixel in the third final layer.

Convolutional neural networks may have a reduced receptive field, for example, if (e.g., when) shallow architectures are assumed. The receptive field of CNNs may expand exponentially one layer at a time, for example, resulting to a higher computation load, and consequently a higher energy consumption. The receptive field size may give an indication of the data block size (e.g., minimal data block size) which may enable parallelizing the computation. As such it may give input(s) to the estimation of the energy used (e.g., needed) at the device (e.g., depending on its hardware/software implementation) to run the neural network.

The receptive field (e.g., in a given layer) may be determined by the size of the convolutional kernel (e.g., the filter) and/or the stride used during the convolution operation. A layer's neurons may have larger receptive fields, for example, if the layer uses larger kernels and strides. Conversely, smaller kernels and strides may result in smaller receptive fields.

The complete receptive field of a full neural network can be computed as the composition of (e.g., all) receptive fields for each subsequent layer. Metadata may indicate one or more of the following associated with receptive field: nnpfc_receptive_field_width; nnpfc_receptive_field_height; nnpfc_receptive_field_size; nnpfc_receptive_field_size_idc; etc. The metadata may be related to the complete receptive field of the full neural network (as a composition of all receptive fields of the neural network) or to the set of receptive fields of the neural network.

For example, nnpfc_receptive_field_width may indicate the width (e.g., minimal, average, maximal width) of (e.g., all) receptive fields considering (e.g., all) the layers of the NNPF. For example, for a receptive field of size 15x15, nnpfc_receptive_field_width may be equal to 15.

For example, nnpfc_receptive_field_height may indicate the height (e.g., minimal, average, maximal height) of (e.g., all) receptive fields considering (e.g., all) layers of the NNPF. For example, for a receptive field of size 15x15, nnpfc_receptive_field_height may be equal to 15.

The receptive field may (e.g., alternatively) be described by its full size.

For example, nnpfc_receptive_field_size may indicate the size (e.g., minimal, average, maximal size) of (e.g., all) receptive fields considering (e.g., all) layers of the NNPF. For example, for a receptive field of size 15x15, nnpfc_receptive_field_size may be equal to 225.

For example (e.g., alternatively), nnpfc_receptive_field_size_idc may indicate the size (e.g., minimal, average, maximal size) of (e.g., all) receptive fields considering (e.g., all) layers of the NNPF and it may be coded according to Table 5.

**Table 5. Example of nnpfc_receptive_field_size_idc metadata.**

| **nnpfc_receptive_field_size_idc** | **Interpretation** |
|---|---|
| 0 | The size of the receptive field is 3x3 |
| 1 | The size of the receptive field is 4x4 |
| 2 | The size of the receptive field is 5x5 |
| 3 | The size of the receptive field 9x9 |
| 4 | The size of the receptive field is 16x16 |
| 5 | The size of the receptive field is 25x25 |
| 6-7 | Reserved for future use |

Additional information associated with compatibility with data types may be included and/or described herein. For example, the additional information may include a nnpfc_data_type_compatibility_flag.

For example, nnpfc _data type_compatibility_flags may correspond to a bit field mask that may indicate the different compatible data types that may be used, among, for example FP4, FP6, FP8, INT8, FP16, BF16 (or BFLOAT16), TF32, FP32, FP64, FP80. These data types may describe different floating point formats. The values of nnpfc_data_type_compatibility_flags may be as illustrated in Table 6.

For example, bit 0 may indicate that the NN's architecture and use is compatible with the data type of type FP4.

For example, bit 1 may indicate that the NN's architecture and use is compatible with the data type of type FP6.

For example, bit 2 may indicate that the NN's architecture and use is compatible with the data type of type INT8.

For example, bit 3 may indicate that the NN's architecture and use is compatible with the data type of type FP8.

For example, bit 4 may indicate that the NN's architecture and use is compatible with the data type of type FP16.

For example, bit 5 may indicate that the NN's architecture and use is compatible with the data type of type BF16 (BFLOAT16).

For example, bit 6 may indicate that the NN's architecture and use is compatible with the data type of type TF32.

For example, bit 7 may indicate that the NN's architecture and use is compatible with the data type of type FP32.

For example, bit 8 may indicate that the NN's architecture and use is compatible with the data type of type FP64.

For example, bit 9 may indicate that the NN's architecture and use is compatible with the data type of type FP80.

For example, bit 10-12 may be reserved for future use.

**Table 6 - Example description of nnpfc_data_type_compatibility_flags**

| **Bit number** | **Data type** |
|---|---|
| 0 | FP4 |
| 1 | FP6 |
| 2 | INT8 |
| 3 | FP8 |
| 4 | FP16 |
| 5 | BF16 |
| 6 | TF32 |
| 7 | FP32 |
| 8 | FP64 |
| 9 | FP80 |
| 10-12 | Reserved for future use |

In examples (e.g., alternative embodiment or in complement to the above metadata), another metadata indicating the minimum data type compatible with the neural network's architecture and use may be provided. For example, the metadata may include nnpfc_minimum_data_type_idc.

For example, nnpfc_minimum_data_type_idc may indicate the minimum compatible data type that may be used, among for example FP4, FP6, FP8, INT8, FP16, BF16 (or BFLOAT16), TF32, FP32, FP64, FP80. These data types may describe different floating point formats. The values of nnpfc_minimum_data_type_idc may be as illustrated in Table 7.

**Table 7 - Example description of nnpfc_minimum_data_type_idc**

| **Bit number** | **Data type** |
|---|---|
| 0 | FP4 |
| 1 | FP6 |
| 2 | INT8 |
| 3 | FP8 |
| 4 | FP16 |
| 5 | BF16 |
| 6 | TF32 |
| 7 | FP32 |
| 8 | FP64 |
| 9 | FP80 |
| 10-15 | Reserved for future use |

A higher data type representation in terms of number of bits may be associated with a higher computation load and a bigger use (e.g., need) of the memory. Both the size of used (e.g., needed) memory and the computation load may be directly linked with the energy consumption of a program. Therefore, indicating which data types are compatible with a specific network architecture and trained weights may give information to the device on how much energy consumption can be expected from running the neural network.

Additional information associated with simplified network architecture may be provided and/or described herein. For example, the additional information may include one or more of the following: nnpfc_simplified_architecture_present_flag; nnpfc_num_layer_types; nnpf_layer_kernel_width[ i ]; nnpf_layer_kernel_height[ i ]; nnpf_layer_size[ i ]; nnpf_layer_spatial_invariance_x[ i ]; nnpf_layer_spatial_invariance_y[ i ]; nnpf_layer_spatial_invariance_z[ i ]; nnpfc_num_layers[ i ]; etc.

For example, nnpfc_simplified_architecture_present_flag may indicate whether a simplified architecture of the neural network is present or not. For example, nnpfc_simplified_architecture_present_flag equal to 1 may indicate that a simplified architecture of the neural network is present. For example, nnpfc_simplified_architecture_present_flag equal to 0 may indicate that a simplified architecture of the neural network is not present. This metadata may be optional.

For example, nnpfc_num_layer_types may indicate the number of different layer types present in the NNPF architecture. A layer type may for example be defined by one or more of its size, its kernel dimensions, or its spatial invariance.

For example, nnpf_layer_kernel_width[ i ] may indicate the width of the kernel used in layer type of index i.

For example, nnpf_layer_kemel_height[ i ] may indicate the width of the kernel used in layer type of index j.

For example, nnpf_layer_size[ i ] may indicate the size of the layer type of index i.

For example, nnpf_layer_spatial_invariance_x[ i ] may indicate the spatial invariance of the layer type of index i, in the first dimension corresponding to the kernel width. For example, nnpf_layer_spatial_invariance_x[ i ] may be coded over 1 bit. For example, nnpf_layer_spatial_invariance_x[ i ] equal to 0 may indicate no spatial invariance on the first dimension. For example, nnpf_layer_spatial_invariance_x[ i ] equal to 1 may indicate spatial invariance on the first dimension.

For example, nnpf_layer_spatial_invariance_y[ i ] may indicate the spatial invariance of the layer type of index i, in the second dimension corresponding to the kernel height. For example, nnpf_layer_spatial_invariance_y[ i ] equal to 0 may indicate no spatial invariance on the first dimension. For example, nnpf_layer_spatial_invariance_y[ i ] equal to 1 may indicate spatial invariance on the first dimension.

For example, nnpf_layer_spatial_invariance_z[ i ] may indicate the spatial invariance of the layer type of index i, in the third dimension corresponding to the layer size. For example, nnpf_layer_spatial_invariance_z[ i ] equal to 0 may indicate no spatial invariance on the first dimension. For example, nnpf_layer_spatial_invariance_z[ i ] equal to 1 may indicate spatial invariance on the first dimension.

For example, nnpfc_num_layers[ i ] may indicate the number of layers in the NNPF that correspond to layer type of index i

The above metadata (e.g., with respect to a simplified network's architecture) may enable a more precise estimation of the energy needed to run a neural network as they may give information about the memory used (e.g., needed) to store and use the neural network. This simplified architecture may provide (e.g., give) information about the receptive field for each layer (e.g., the maximal layer size).

In examples, other additional metadata describing by other means a simplified architecture of a neural network may be used.

In examples, additional information may complement the above simplified architecture, for example, the sparsity per type of layer or for all layers of a given layer type, the number of ones per type of layer or for all layers of a given layer type.

In examples, the SEI message may be a neural-network post-filter characteristics (NNPFC) SEI message. The additional information may be indicated by at least one value associated with an NNPFC mode indication within the NNPFC SEI message.

In examples, additional information may be added within nnpfc_mode equal to 1.

For example, the above additional information may be carried within the case of nnpfc _mode equal to 1.

In the NNPFC SEI message, nnpfc_mode_idc (e.g., when equal to 0) may indicate that the neural network information is contained in the NNPFC SEI message. The neural network information may be in the format of an ISO/IEC 15938-17 bitstream. For example, nnpfc_mode_idc equal to 1 may indicate that the neural network information is identified by the URI indicated by nnpfc_uri with the format identified by the tag URI nnpfc_tag_uri.

In this case, the syntax of the NNPFC SEI message may be modified according to Table 8.

**Table 8.**

| | |
|---|---|
| nn_post_ filter_characteristics( payloadSize ) { | **Descripto r** |
| nnpfc_purpose | u(16) |
| nnpfc_id | ue(v) |
| nnpfc_base_flag | u(1) |
| nnpfc_mode_idc | ue(v) |
| if( nnpfc_mode_idc == 1) { | |
| nnpfc_non_null_weight | u(6) |
| nnpfc_sparsity_idc | u(7) |
| nnpfc_weights_equal_one | u(6) |
| nnpfc_proportion_of_ones_idc | u(7) |
| nnpfc_max_layer_size_idc | u(8) |
| nnpfc_receptive_field_width | u(8) |
| nnpfc_receptive_field_height | u(8) |
| nnpfc_data_type_compatibility_flags | u(12) |
| nnpfc_minimum_data type_idc | u(4) |
| nnpfc_simplified_architecture_present_flag | u(1) |
| if( nnpfc_simplified_architecture_present_flag ) { | |
| nnpfc_num_layer types | u(16) |
| for(i = 0; i <= nnpfc num layer types; i++ ){ | |
| nnpf_layer_kernel_width[ i ] | u(8) |
| nnpf_layer_kernel_height[ i ] | u(8) |
| nnpf_layer_size[ i ] | u(8) |
| nnpf_layer_spatial_invariance_x[ i ] | u(1) |
| nnpf_layer_spatial_invariance_y[ i ] | u(1) |
| nnpf_layer_spatial_invariance_z[ i ] | u(1) |
| nnpfc_num_layers[ i ] | u(8) |
| } | |
| } | |
| while( !byte_aligned( ) ) | |
| nnpfc_alignment_zero_bit_a | f(1) |
| nnpfc_tag_uri | st(v) |
| nnpfc_uri | st(v) |
| } | |
| nnpfc_property_present_flag | u(1) |
| if( nnpfc_property_present_flag ) { | |
| /* input and output formatting */ | |
| nnpfc_num_input_pics_minus1 | ue(v) |
| if( nnpfc_num_input_pics_minus1 > 0 ) { | |
| for( i = 0; i <= nnpfc_num_input_pics_minus1; i++ ) | |
| nnpfc_input_pic_filtering_flag[ i ] | u(1) |
| nnpfc_absent_input_pic_zero_flag | u(1) |
| } | |
| ... | |

In examples (e.g., alternatively or additionally), the additional information may (e.g., may also) be added to the case of nnpfc_mode equal to 0. The syntax may then be modified as shown in Table 9.

**Table 9.**

| | |
|---|---|
| .... | **Descripto r** |
| if( SpatialExtrapolationFlag ) | |
| nnpfc_scan_type_idc | u(2) |
| nnpfc_reserved_metadata_extension | u(v) |
| } | |
| } | |
| /* ISO/IEC 15938-17 bitstream */ | |
| if( nnpfc_mode_idc = = 0 ){ | |
| nnpfc_non_null_weight | u(6) |
| nnpfc_sparsity_idc | u(7) |
| nnpfc_weights_equal_one | u(6) |
| nnpfc_proportion_of_ones_idc | u(7) |
| nnpfc_max_layer_size_idc | u(8) |
| nnpfc_receptive_field_width | u(8) |
| nnpfc_receptive_field_height | u(8) |
| nnpfc_data_type_compatibility_flags | u(12) |
| nnpfc_minimum_data type_idc | u(4) |
| nnpfc_simplified_architecture_present_flag | u(1) |
| if( nnpfc_simplified_architecture_present_flag ){ | |
| nnpfc_num_layer types | u(16) |
| for(i = 0; i <= nnpfc_num_layer_types; i++ ){ | |
| nnpf_layer_kemel_width[ i ] | u(8) |
| nnpf_layer_kernel_height[ i ] | u(8) |
| nnpf_layer_size[ i ] | u(8) |
| nnpf_layer_spatial_invariance_x[ i ] | u(1) |
| nnpf_layer_spatial_invariance_y[ i ] | u(1) |
| nnpf_layer_spatial_invariance_z[ i ] | u(1) |
| nnpfc_num_layers[ i ] | u(8) |
| } | |
| } | |
| while( !byte_alignedo( ) ) | |
| nnpfc_alignment_zero_bit_b | u(1) |
| for( i = 0; more_data_in_pay_load( ); i++ ) | |
| nnpfc_payload_byte[ i ] | b(8) |
| } | |
| } | |

In examples, additional information may be added via mode value(s) (e.g., two new mode values, e.g., 2 and 3). For example, the SEI message syntax may be modified as shown in Table 10.

**Table 10.**

| | |
|---|---|
| nn_post_filter_characteristics( payloadSize ) { | **Descripto r** |
| nnpfc_purpose | u(16) |
| nnpfc_id | ue(v) |
| nnpfc_base_flag | u(1) |
| nnpfc_mode_idc | ue(v) |
| if( nnpfc_mode_idc = = 1) or ( nnpfc_mode_idc = = 3) { | |
| while( !byte_alignedo( ) ) | |
| nnpfc_alignment_zero_bit_a | u(1) |
| nnpfc_tag_uri | st(v) |
| nnpfc_uri | st(v) |
| } | |
| nnpfc_property_present_flag | u(1) |
| if( nnpfc_property_present_flag ) { | |
| /* input and output formatting */ | |
| nnpfc_num_input_pics_minus1 | ue(v) |
| if( nnpfc_num_input_pics_minus1 > 0 ) { | |
| for( i = 0; i <= nnpfc_num_input_pics_minus1; i++ ) | |
| nnpfc_input_pic_filtering_flag[ i ] | u(1) |
| nnpfc_absent_input_pic_zero_flag | u(1) |
| } | |
| if( ChromaUpsamplingFlag ) | |
| nnpfc_out_sub_c_flag | u(1) |
| if( ColourizationFlag ) | |
| nnpfc_out_colour_format_idc | u(2) |
| if( ResolutionResamplingFlag ) { | |
| nnpfc_pic_width_num_minus1 | ue(v) |
| nnpfc_pic_width_denom_minus1 | ue(v) |
| nnpfc_pic_height_num_minus 1 | ue(v) |
| nnpfc_pic_height_denom_minus1 | ue(v) |
| } | |
| if( PictureRateUpsamplingFlag ) | |
| for( i = 0; i < nnpfc_num_input_pics_minus1; i++ ) | |
| nnpfc_interpolated_pics[ i ] | ue(v) |
| if( TemporalExtrapolationFlag ) | |
| nnpfc_extrapolated_pics_minus1 | ue(v) |
| if( SpatialExtrapolationFlag ) { | |
| nnpfc_spatial_extrapolation_left_offset | ue(v) |
| nnpfc_spatial_extrapolation_right_offset | ue(v) |
| nnpfc_spatial_extrapolation_top_offset | ue(v) |
| nnpfc_spatial_extrapolation_bottom_offset | ue(v) |
| } | |
| nnpfc_component_last_flag | u(1) |
| nnpfc_inp_format_idc | ue(v) |
| nnpfc_auxiliary_inp_idc | ue(v) |
| nnpfc_inp_order_idc | ue(v) |
| if( nnpfc_inp_format_idc = = 1 ) { | |
| if( nnpfc_inp_order_idc != 1) | |
| nnpfc_inp_tensor_luma_bitdepth_minus8 | ue(v) |
| if( nnpfc_inp_order_idc > 0 ) | |
| nnpfc_inp_tensor_chroma_bitdepth_minus8 | ue(v) |
| } | |
| nnpfc_out_format_idc | ue(v) |
| nnpfc_out_order_idc | ue(v) |
| if( nnpfc_out_format_idc = = 1) { | |
| if( nnpfc_out_order_idc != 1) | |
| nnpfc_out_tensor_luma_bitdepth_minus8 | ue(v) |
| if( nnpfc_out_order_idc != 0 ) | |
| nnpfc_out_tensor_chroma_bitdepth_minus8 | ue(v) |
| } | |
| nnpfc_separate_colour_description_present_flag | u(1) |
| if( nnpfc_separate_colour_description_present_flag ) { | |
| nnpfc_colour_primaries | u(8) |
| nnpfc_transfer_characteristics | u(8) |
| if( nnpfc_out_format_idc = = 1) { | |
| nnpfc_matrix_coeffs | u(8) |
| nnpfc_full_range_flag | u(1) |
| } | |
| } | |
| if( nnpfc_out_order_idc > 0 ) | |
| nnpfc_chroma_loc_info_present_flag | u(1) |
| if( nnpfc_chroma_loc_info_present_flag ) | |
| nnpfc_chroma_sample_loc_type_frame | ue(v) |
| nnpfc_overlap | ue(v) |
| nnpfc_constant_patch_size_flag | u(1) |
| if( nnpfc_constant_patch_size_flag ) { | |
| nnpfc_patch_width_minus1 | ue(v) |
| nnpfc_patch_height_minus1 | ue(v) |
| } else { | |
| nnpfc_extended_patch_width_cd_delta_minus1 | ue(v) |
| nnpfc_extended_patch_height_cd_delta_minus1 | ue(v) |
| } | |
| nnpfc_padding_type | ue(v) |
| if( nnpfc_padding_type = = 4 ) { | |
| if( nnpfc_inp_order_idc != 1) | |
| nnpfc _luma_padding_val | ue(v) |
| if( nnpfc _inp_order_idc != 0 ) { | |
| nnpfc_cb_padding_val | ue(v) |
| nnpfc_cr_padding_val | ue(v) |
| } | |
| } | |
| nnpfc_complexity_info_present_flag | u(1) |
| if( nnpfc_complexity_info_present_flag) { | |
| nnpfc_parameter_type_ide | u(2) |
| if( nnpfc_parameter_type_idc != 2) | |
| nnpfc_log2_parameter_bit_length_minus3 | u(2) |
| nnpfc_num_parameters_idc | u(6) |
| nnpfc_num_kmac_operations _idc | ue(v) |
| nnpfc_total_kilobyte_size | ue(v) |
| } | |
| nnpfc_num_metadata_extension_bits | ue(v) |
| if( nnpfc_num_metadata_extension_bits > 0 ) { | |
| if( nnpfc_purpose = = 0 ) { | |
| nnpfc_application_purpose tag_uri_present_flag | u(1) |
| if( nnpfc _application_purpose_tag_uri_present_flag) | |
| nnpfc_ application purpose tag uri | st(v) |
| } | |
| if( SpatialExtrapolationFlag ) | |
| nnpfc_scan_type_idc | u(2) |
| nnpfc_reserved_metadata_extension | u(v) |
| } | |
| } | |
| /* ISO/IEC 15938-17 bitstream */ | |
| if( nnpfc_mode_idc = = 0 ) or (nnpfc_mode_idc == 2){ | |
| while( !byte_alignedo( ) ) | |
| nnpfc_alignment_zero_bit_b | u(1) |
| for( i = 0; more_data_in_payload( ); i++ ) | |
| nnpfc_payload_byte[ i ] | b(8) |
| } | |
| if (nnpfc_mode_idc == 2) or (nnpdf_mode_idc == 3){ | |
| nnpfc_non_null_weight | u(6) |
| nnpfc_sparsity_idc | u(7) |
| nnpfc_weights_equal_one | u(6) |
| nnpfc_proportion_of_ones _idc | u(7) |
| nnpfc_max_layer_size_idc | u(8) |
| nnpfc_receptive_field_width | u(8) |
| nnpfc_receptive_field_height | u(8) |
| nnpfc_data_type_compatibility_flags | u(12) |
| nnpfc_minimum_data type_idc | u(4) |
| nnpfc_simplified_architecture_present_flag | u(1) |
| if( nnpfc_simplified_architecture_present_flag ){ | |
| nnpfc_num_layer types | u(16) |
| for(i = 0; i <= nnpfc_num_layer_types; i++ ){ | |
| nnpf_layer_kemel_width[ i ] | u(8) |
| nnpf_layer_kernel_height[ i ] | u(8) |
| nnpf_layer_size[ i ] | u(8) |
| nnpf_layer_spatial_invariance_x[ i ] | u(1) |
| nnpf_layer_spatial_invariance_y[ i ] | u(1) |
| nnpf_layer_spatial_invariance_z[ i ] | u(1) |
| nnpfc_num_layers[ i ] | u(8) |
| } | |
| } | |
| } | |
| } | |

The following modifications (e.g., as described in the following) of the semantics may then apply.

For example, nnpfc_mode_idc (e.g., when equal to 0) may indicate that the neural network information is included in the NNPFC SEI message and that the neural network information is of a particular format (e.g., the format of an ISO/IEC 15938-17 bitstream). For example, nnpfc_mode_idc equal to 1 may indicate that the neural network information is identified by the URI indicated by nnpfc_uri with the format identified by the tag URI nnpfc_tag_uri. For example, nnpfc_mode_idc equal to 2 may indicate that the neural network information is included in the NNPFC SEI message, that the neural network information is of a particular format (e.g., the format of an ISO/IEC 15938-17 bitstream), and that some additional information related to the neural network architecture follows. For example, nnpfc_mode_idc equal to 3 may indicate that the neural network information is identified by the URI indicated by nnpfc_uri with the format identified by the tag URI nnpfc_tag_uri, and that some additional information related to the neural network architecture follows.

The value of nnpfc_mode_idc may be in the range of 0 to 255 (e.g., inclusive). Values of 4 to 255 (e.g., inclusive) for nnpfc_mode_idc may be reserved for future use and may not be present in bitstreams. Decoders may ignore NNPFC SEI messages with nnpfc_mode_idc in the range of 4 to 255 (e.g., inclusive).

In examples, the additional information may be indicated by an extension metadata indication within the NNPFC SEI message.

This additional information related to the network architecture may be added by using one or more of the following: the nnpfc_num_metadata_extension_bits metadata; nnpfc_reserved_metadata_extension metadata; etc.

In examples (e.g., alternatively), either the nnpfc_complexity_info_present_flag may be re-used, or an indication or a (e.g., new) metadata flag (e.g., nnpfc_architecture_info_present_flag) may be defined and re-used, or none of these two flags may be used to indicate that the metadata relative to the network architecture information may follow.

The syntax may be modified as shown in Table 11.

**Table 11.**

| | |
|---|---|
| ... | **Descripto r** |
| nnpfc_num_kmac_operations _idc | ue(v) |
| nnpfc_total_kilobyte_size | ue(v) |
| } | |
| nnpfc_num_metadata_extension_bits | ue(v) |
| if( nnpfc_num_metadata_extension_bits > 0 ) { | |
| if( nnpfc_purpose = = 0 ) { | |
| nnpfc_application_purpose tag_uri_present flag | u(1) |
| if( nnpfc_application_purpose_tag_uri_present_flag ) { | |
| while( ! byte_aligned( ) ) | |
| nnpfc_metadata_alignment_zero_bit | f(1) |
| nnpfc_application_purpose_tag_uri | st(v) |
| } | |
| } | |
| if( SpatialExtrapolationFlag \|\| ResolutionResamplingFlag) | |
| nnpfc_scan_type_idc | u(2) |
| nnpfc_for_human_viewing_idc | u(2) |
| nnpfc_for_machine_analysis_idc | u(2) |
| if( nnpfc _complexity_info_present_flag) { | |
| nnpfc_non_null_weight | u(6) |
| nnpfc_sparsity_idc | u(7) |
| nnpfc_weights_equal_one | u(6) |
| nnpfc_proportion_of_ones _idc | u(7) |
| nnpfc_max_layer_size_idc | u(8) |
| nnpfc_receptive_field_width | u(8) |
| nnpfc_receptive_field_height | u(8) |
| nnpfc_data_type_compatibility_flags | u(12) |
| nnpfc_minimum_data type_idc | u(4) |
| nnpfc_simplified_architecture_present_flag | u(1) |
| if( nnpfc _simplified_architecture_present_flag ) { | |
| nnpfc_num_layer types | u(16) |
| for(i = 0; i <= nnpfc_num_layer_types; i++ ){ | |
| nnpf_layer_kernel_width[ i ] | u(8) |
| nnpf_layer_kernel_height[ i ] | u(8) |
| nnpf_layer_size[ i ] | u(8) |
| nnpf_layer_spatial_invariance_x[ i ] | u(1) |
| nnpf_layer_spatial_invariance_y[ i ] | u(1) |
| nnpf_layer_spatial_invariance_z[ i ] | u(1) |
| nnpfc_num_layers[ i ] | u(8) |
| } | |
| } | |
| } | |
| nnpfc_reserved_metadata_extension | u(v) |
| } | |

In examples, the additional information may be indicated by a complexity metadata indication within the NNPFC SEI message.

In examples, the additional information may be carried within the complexity metadata, for example, depending on the value of the nnpfc_complexity_info_present_flag. If this flag is equal to 1, the added metadata may be defined in the NNPFC SEI message.

The syntax may be described as shown in Table 12.

**Table 12.**

| | |
|---|---|
| ... | **De scriptor** |
| nnpfc_cr_padding_val | ue(v) |
| } | |
| } | |
| nnpfc_complexity_info_present_flag | u(1) |
| if( nnpfc_complexity_info_present_flag) { | |
| nnpfc_parameter_type_ide | u(2) |
| if( nnpfc_parameter_type_idc != 2 ) | |
| nnpfc_log2_parameter_bit_length_minus3 | u(2) |
| nnpfc_num_parameters_idc | u(6) |
| nnpfc_num_kmac_operations _idc | ue(v) |
| nnpfc_total_kilobyte_size | ue(v) |
| nnpfc_non_null_weight | u(6) |
| nnpfc_sparsity_idc | u(7) |
| nnpfc_weights_equal_one | u(6) |
| nnpfc_proportion_of_ones_idc | u(7) |
| nnpfc_max_layer_size_idc | u(8) |
| nnpfc_receptive_field_width | u(8) |
| nnpfc_receptive_field_height | u(8) |
| nnpfc_data_type_compatibility_flags | u(12) |
| nnpfc_minimum_data_type_idc | u(4) |
| nnpfc_simplified_architecture_present_flag | u(1) |
| if( nnpfc_simplified_architecture_present_flag ){ | |
| nnpfc_num_layer_types | u(16) |
| for(i = 0; i <= nnpfc_num_layer_types; i++ ){ | |
| nnpf_layer_kernel_width[ i ] | u(8) |
| nnpf_layer_kernel_height[ i ] | u(8) |
| nnpf_layer_size[ i ] | u(8) |
| nnpf_layer_spatial_invariance_x[ i ] | u(1) |
| nnpf_layer_spatial_invariance_y[ i ] | u(1) |
| nnpf_layer_spatial_invariance_z[ i ] | u(1) |
| nnpfc_num_layers[ i ] | u(8) |
| } | |
| } | |
| } | |
| nnpfc_num_metadata_extension_bits | ue(v) |
| if( nnpfc_num_metadata_extension_bits > 0 ) { | |
| if( nnpfc_purpose = = 0 ) { | |

In examples, the SEI message may be a neural network post filtering group characteristics (NNPFGC) SEI message. The additional information may be indicated within the NNPFGC SEI message.

The NNPFGC SEI message may convey information related to a group of neural network post filters. The syntax corresponding to the NNPFGC SEI message may be illustrated in Table 13.

**Table 13.**

| | |
|---|---|
| nn_post_post_filter_group_characteristics( payloadSize ) { | **Descripto r** |
| nnpfgc_id | ue(v) |
| nnpfgc_grouping_type | ue(v) |
| if( nnpfgc_grouping_type = = 0 \|\| nnpfgc_grouping_type = = 2) | |
| nnpfgc_purpose | u(16) |
| nnpfgc_num_members_minus2 | ue(v) |
| for( i = 0; i <= nnpfgc_num_members_minus2 + 1; i++ ) { | |
| nnpfgc_member_id[ i ] | ue(v) |
| if( nnpfgc_grouping_type = = 1 \|\| nnpfgc_grouping_type = = 3 ) | |
| nnpfgc_member_purpose[ i ] | u(16) |
| } | |
| nnpfgc_complexity_info_present_flag | u(1) |
| if( nnpfgc_complexity_info_present_flag ) { | |
| nnpfgc_parameter_type_idc | u(2) |
| if( nnpfgc_parameter_type_idc != 2 ) | |
| nnpfgc_log2_parameter_bit_length_minus3 | u(2) |
| nnpfgc_num_parameters_idc | u(6) |
| nnpfgc_num_kmac_operations_idc | ue(v) |
| nnpfgc_total_kilobyte_size | ue(v) |
| } | |
| } | |

The examples and embodiments described herein may be adapted to add additional information related to the networks' architectures in the NNPFGC SEI message.

The additional information on the sparsity that may be included in the NNPFGC SEI message may correspond to a list of sparsity information per neural network in the group of neural networks, or to a sum of the sparsity for all neural networks (e.g., the sum of the non-zero weights for all networks). The additional information can correspond to an average sparsity indication or a maximum sparsity indication over all networks. The additional information on the number of weights equal to one may correspond to a list of number of weights equal to one per neural network in the group of neural networks, or to a sum of the number of weights equal to one for all neural networks. The additional information can also correspond to an average number of weights equal to one or a maximum number of weights equal to one for all networks indication.

The additional information of the maximum layer size may be indicated through the list of the maximum layer sizes per network, or the maximum layer size for (e.g., all) networks.

The additional information of the receptive field (e.g., minimum, average, maximum receptive field) for (e.g., all) networks may be indicated. In examples, a list of the receptive fields per network may be indicated.

The additional information of compatibility with data types for all networks may be indicated. A list of data type compatibilities per network may (e.g., alternatively) be indicated. A minimum data type for all networks may (e.g., alternatively) be indicated.

The additional information related to the simplified architectures of the group of networks may be indicated as a list of simplified architectures for each network, or through the maximum (e.g., more complex, more energy demanding, etc.) simplified architecture among (e.g., all) simplified network architectures.

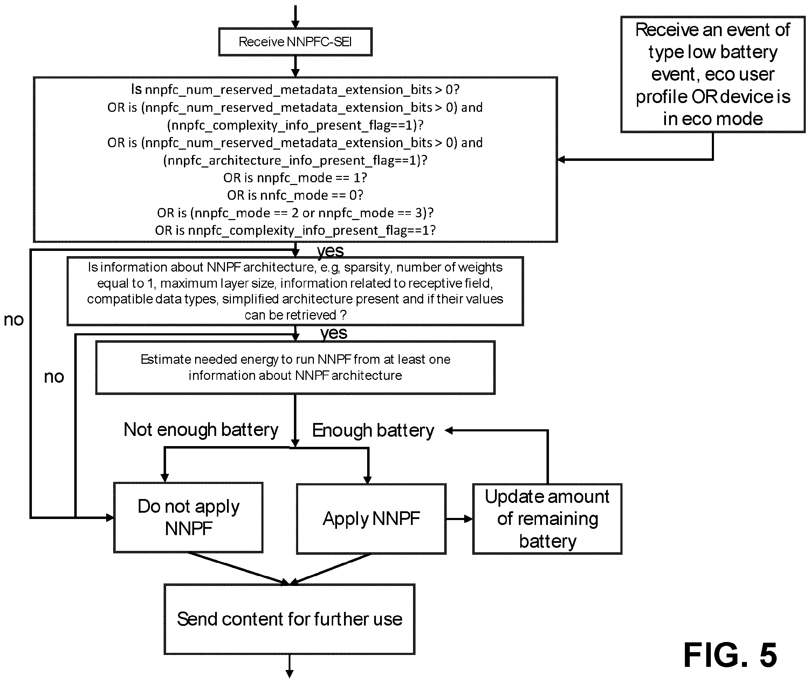

FIG. 5 illustrates an example flow of determining whether to apply a NNPF based on an obtained NNPFC SEI message. An example implementation may be illustrated by FIG. 5. The NNPFC SEI message may be received (e.g., at the decoder side). For example, metadata information associated with a network architecture of a neural network may be obtained within the NNPFC SEI message. The metadata information may include additional information that enables an estimation of energy needed to run a neural-network post filter (NNPF). An amount of energy associated with running a neural-network post filter (NNPF) may be estimated, for example, based on the additional information. An energy-related event (e.g., an indication of an energy-related event) may be received. The energy-related event may indicate, for example, a low battery or a user eco mode (e.g., energy economy mode); or an indication that the device is set in an eco mode. An estimation of an amount of estimated energy associated with running the NNPF may be based on the energy-related event (e.g., an indication of the energy-related event).

For example, it may be checked whether the extension-related metadata flag, the mode-related flag, the complexity flag are set so that additional metadata related to the network architecture may be found. If no, the NNPF may be refrained from being applied (e.g., not applied), and the content may be sent for further use, e.g., for display.

If yes, it may be checked whether the additional information that enables an estimation of energy needed to run an NNPF can be found and whether their values can be retrieved, among for example, a sparsity indication, an indication on the number of weights equal to 1, an indication on the network receptive field, an indication on the compatible data types, an indication on the maximum layer size, a simplified network's architecture description, etc. In case the additional information cannot be retrieved, the NNPF is refrained from being applied (e.g., not be applied) and the content may be sent for further use, e.g., for display.

If the additional information can be found and that values related to the additional information can be retrieved, the amount of energy associated with running the NNPF may be estimated, an estimation of the energy used (e.g., needed) to run the NNPF may be performed (e.g., conducted), for example, using at least one of the retrieved additional information. This amount of energy may be compared to the available energy in the device. If not enough energy is available (e.g., if the amount of energy associated with running the NNPF is below a threshold), the NNPF may be refrained from being applied (e.g., not be applied), and the content may be sent for further use, e.g., for display. If enough energy is available (e.g., if the amount of energy associated with the NNPF is above a threshold), the NNPF may be applied, before sending the content for further use.

Whether to apply the NNPF may be determined, for example, based on an estimated amount of energy associated with running the NNPF. In examples, the decision to apply the NNPF may be based on (e.g., conditioned to) the amount of energy used (e.g., needed) to perform a process or to the amount of energy used (e.g., needed) by a tool (e.g., some other tools), for example, at the decoder side.

In examples, if several post processing are applied (e.g., determined to be applied, must be applied), the decision to apply the NNPF can also be conditioned to a level of priority.

The decision whether to apply the NNPFs or not may be determined based on criteria, for example, other than the amount of battery. It can be based on some system-based threshold.

The decision may be based on, for example, some user profile containing an energy threshold above which the user does not want to go. In this case, one use case could be a user watching a content on a TV screen, and this user having a user profile with a defined maximum energy threshold. If the application of the NNPF results in some energy consumption higher than the threshold, then the filter may be refrained from being applied (e.g., not be applied).

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. Video data (e.g., a bitstream) that may include one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A video decoding device, comprising:
a processor configured to:
obtain, within a supplemental enhancement information (SEI) message, metadata information associated with a network architecture of a neural network, wherein the metadata information comprises additional information that enables an estimation of energy needed to run a neural-network post filter (NNPF);
based on at least the additional information, estimate an amount of energy associated with running the NNPF; and
apply the NNPF based on the estimated amount of energy associated with running the NNPF.

2. A video decoding method, the method comprising:
obtaining, within a supplemental enhancement information (SEI) message, metadata information associated with a network architecture of a neural network, wherein the metadata information comprises additional information that enables an estimation of energy needed to run a neural-network post filter (NNPF);
based on at least the additional information, estimating an amount of energy associated with running a neural-network post filter (NNPF); and
applying the NNPF based on the estimated amount of energy associated with running the NNPF.

3. The video decoding device of claim 1 or the video decoding method of claim 2, wherein the processor of claim 1 is further configured to perform, or the method of claim 2 further comprises:
determining that the additional information can be found and that values related to the additional information can be retrieved, wherein the estimation of the amount of estimated energy associated with running the NNPF is based on the determination that the additional information can be found and that the values related to the additional information can be retrieved.

4. The video decoding device of any of claims 1 and 3 or the video decoding method of any of claims 2 to 3, wherein the processor of any of claims 1 and 3 is further configured to perform, or the method of any of claims 2 to 3 further comprises:
determining that the estimated amount of energy associated with running the NNPF is above a threshold, wherein the NNPF is applied based on the estimated amount of energy associated with running the NNPF being above the threshold.

5. The video decoding device of any of claims 1 and 3 to 4 or the video decoding method of any of claims 2 to 4, wherein the processor of any of claims 1 and 3 to 4 is further configured to perform, or the method of any of claims 2 to 4 further comprises:
receiving an indication of an energy-related event, wherein the estimation of the amount of estimated energy associated with running the NNPF is further based on receiving the indication of the energy-related event.

6. The video decoding device of any of claims 1 and 3 to 5 or the video decoding method of any of claims 2 to 5, wherein the additional information includes at least one of: a sparsity of the neural network, a number of weights equal to one in the neural network, a maximum layer size of the neural network, an information indicative of at least one receptive field of the neural network, at least one number of data types compatible with the neural network, or a simplified architecture .

7. The video decoding device of any of claims 1 and 3 to 6 or the video decoding method of any of claims 2 to 6, wherein the SEI message is a neural-network post-filter characteristics (NNPFC) SEI message, and wherein the additional information is indicated by at least one value associated with an NNPFC mode indication within the NNPFC SEI message.

8. The video decoding device of any of claims 1 and 3 to 6 or the video decoding method of any of claims 2 to 6, wherein the SEI message is an NNPFC SEI message, and wherein the additional information is indicated by an extension metadata indication within the NNPFC SEI message.

9. The video decoding device of any of claims 1 and 3 to 6 or the video decoding method of any of claims 2 to 6, wherein the SEI message is an NNPFC SEI message, and wherein the additional information is indicated by a complexity metadata indication within the NNPFC SEI message.

10. The video decoding device of any of claims 1 and 3 to 6 or the video decoding method of any of claims 2 to 6, wherein the SEI message is a neural network post filtering group characteristics (NNPFGC) SEI message, and wherein the additional information is indicated within the NNPFGC SEI message.

11. A video encoding device, comprising:
a processor configured to:
obtain metadata information associated with a network architecture of a neural network;
determine to add additional information to the metadata information, wherein the additional information enables an estimation of energy needed to run a neural-network post filter (NNPF);
include, in video data, the additional information within a supplemental enhancement information (SEI) message.

12. A video encoding method, the method comprising:
obtaining metadata information associated with a network architecture of a neural network;
determining to add additional information to the metadata information, wherein the additional information enables an estimation of energy needed to run a neural-network post filter (NNPF);
including, in video data, the additional information within a supplemental enhancement information (SEI) message.

13. The video encoding device of claim 11 or the video encoding method of claim 12, wherein the additional information includes at least one of: a sparsity of the neural network, a number of weights equal to one in the neural network, a maximum layer size of the neural network, an information indicative of at least one receptive field of the neural network, at least one data type compatible with the neural network, or a simplified architecture of the neural network.

14. The video encoding device of any of claims 11 and 13 or the video encoding method of any of claims 12 to 13, wherein the SEI message is a neural-network post-filter characteristics (NNPFC) SEI message, and wherein the additional information is indicated by one of: a value associated with an NNPFC mode indication within the NNPFC SEI message, an extension metadata indication within the NNPFC SEI message, or a complexity metadata indication within the NNPFC SEI message.

15. The video encoding device of any of claims 11 and 13 or the video encoding method of any of claims 12 to 13, wherein the SEI message is a neural network post filtering group characteristics (NNPFGC) SEI message, and wherein the additional information is indicated within the NNPFGC SEI message.
